# EUROPÄISCHE PATENTSCHRIFT

(11) **EP 3 668 683 B1**
(45) Veröffentlichungstag und Bekanntmachung des Hinweises auf die Patenterteilung: **27.12.2023**
(21) Anmeldenummer: 18749411.7
(22) Anmeldetag: 10.08.2018
(51) Int. Cl.: B23Q 3/12

(54) **WERKZEUGMASCHINE MIT ELEKTRISCH ISOLIERTEM RASTELEMENT**
MACHINE TOOL WITH ELECTRICALLY ISOLATED FIXING ELEMENT
MACHINE-OUTIL AVEC ÉLÉMENT D'ENCLIQUETAGE ISOLÉ ÉLECTRIQUEMENT

(30) Priorität: 18.08.2017 EP 17186769
(43) Veröffentlichungstag der Anmeldung: 24.06.2020
(73) Patentinhaber: Hilti Aktiengesellschaft, 9494 Schaan (LI)
(72) Erfinder: MÖGLICH, Tobias, 80339 München (DE)
(74) Vertreter: Hilti Aktiengesellschaft Corporate Intellectual Property
(86) Internationale Anmeldenummer: PCT/EP2018/071713
(87) Internationale Veröffentlichungsnummer: WO 2019/034541

(56) Entgegenhaltungen:
- WO-A1-85/01089
- DE-A1- 2 122 582
- DE-A1- 2 158 118
- US-A- 4 179 632

## Beschreibung

Die vorliegende Erfindung betrifft eine Werkzeugmaschine mit einer Werkzeugaufnahme zum auswechselbaren Aufnehmen eines Werkzeugs gemäß dem Oberbegriff des Patentanspruchs 1.

Eine derartige Werkzeugmaschine geht beispielsweise aus der US 4 179 632 A hervor.

Genauer betrifft die vorliegende Erfindung eine Werkzeugmaschine mit einer Werkzeugaufnahme zum auswechselbaren Aufnehmen eines Werkzeugs, wobei die Werkzeugmaschine ein Werkzeugmaschinengehäuse, eine drehbar in dem Werkzeugmaschinengehäuse gelagerte Spindel mit einem Antriebsende und einem Aufnahmeende und eine in dem Werkzeugmaschinengehäuse gelagerte Rastvorrichtung mit einem Rastelement umfasst. Das Antriebsende der Spindel ist mit einem Antrieb zum Drehen der Spindel um eine Drehachse verbunden und das Aufnahmeende der Spindel ist mit der Werkzeugaufnahme gekoppelt. Das Rastelement weist ein Rastende zum Zusammenwirken mit der Spindel und ein Betätigungsende auf, wobei das Rastelement zwischen einer Freigabestellung und einer Verriegelungsstellung reversibel bewegbar ist. Das Rastende des Rastelements weist wenigstens ein Formschlussmittel und die Spindel wenigstens ein Gegenformschlussmittel auf, wobei in der Freigabestellung des Rastelements das wenigstens eine Formschlussmittel des Rastelements außer Eingriff mit dem wenigstens einen Gegenformschlussmittel der Spindel ist, um eine Drehbewegung der Spindel zu ermöglichen, und in der Verriegelungsstellung des Rastelements das wenigstens eine Formschlussmittel des Rastelements in Eingriff mit dem wenigstens einen Gegenformschlussmittel der Spindel ist, um eine Drehbewegung der Spindel zu verhindern und ein Auswechseln des Werkzeuges von der Werkzeugaufnahme zu ermöglichen.

Während des Benutzens einer Werkzeugmaschine, z.B. einer Trockenbaufräse, kann es passieren, dass das Werkzeug auf eine stromführende Leitung trifft.

Um eine Bedienperson in einer solchen Situation beim Umgang mit der Werkzeugmaschine vor einem elektrischen Schlag zu schützen, ist das Werkzeugmaschinengehäuse zumindest in den Bereichen elektrisch von der Spindel abgeschirmt, welche während des Benutzens der Werkzeugmaschine von einer Bedienperson berührt werden oder zumindest berührt werden können. Diese elektrische Isolierung kann dadurch erreicht werden, dass die Spindel von elektrisch isolierten Lagern abgestützt wird.

Beim Auswechseln des Werkzeuges allerdings muss die Spindel von der Bedienperson fixiert werden, da sich sonst das Werkzeug nicht von der Spindel entkoppeln lässt. Zum Fixieren der Spindel ist eine von der Bedienperson zu betätigende Rastvorrichtung mit Rastelement vorgesehen. Bei einer Werkzeugmaschine der oben genannten Art ist das Rastelement aus Stabilitätsgründen üblicherweise aus Metall hergestellt und folglich elektrisch leitend.

Wenn das Werkzeug noch mit der elektrischen Leitung in Kontakt ist und gleichzeitig die Rastvorrichtung betätigt wird, kommt das Rastelement mit der nun elektrisch geladenen Spindel in Kontakt, wodurch die elektrisch isolierende Lagerung der Spindel vom Werkzeugmaschinengehäuse umgangen wird. Da die Rastvorrichtung in dem Werkzeugmaschinengehäuse gelagert ist, kann sich über das Rastelement und die Spindel auch das Werkzeugmaschinengehäuse elektrisch aufladen. Es besteht dann für die Bedienperson die Gefahr eines elektrischen Schlags. Eine derartige Situation kann entstehen, wenn beispielsweise das Werkzeug bei der Bearbeitung einer Wand mit einer stromführenden Leitung in Kontakt gerät und sich das drehende Werkzeug so fest mit der Stromleitung verwickelt, dass ein Lösen (z.B. Herausziehen des Werkzeugs aus der Wand) nicht mehr möglich ist. In diesem Fall lässt sich nicht ausschließen, dass eine Bedienperson, wie vorstehend beschrieben, die Rastvorrichtung betätigt in der Absicht die Werkzeugmaschine von dem festsitzenden Werkzeug zu lösen.

Die Aufgabe der vorliegenden Erfindung ist es, eine Werkzeugmaschine der eingangs genannten Art bereitzustellen, bei welcher für eine Bedienperson keine Gefahr für einen elektrischen Schlag beim Auswechseln des Werkzeuges besteht.

Eine Werkzeugmaschine gemäß der Erfindung ist in Patentanspruch 1 definiert. Zur

Lösung der Aufgabe schlägt die vorliegende Erfindung vor, die Rastvorrichtung der Werkzeugmaschine mit einer elektrisch isolierenden Lagervorrichtung zum Lagern des Rastelements in dem Werkzeugmaschinengehäuse bereitzustellen, um das Rastelement elektrisch gegenüber dem Werkzeugmaschinengehäuse zu isolieren.

Erfindungsgemäß verhindert die das Rastelement lagernde Lagervorrichtung eine Entladung der Spindel über das Rastelement der Rastvorrichtung, das Werkzeugmaschinengehäuse und schließlich die Bedienperson. Die elektrische Isolierung der Lagervorrichtung kann dadurch erreicht sein, dass die Lagervorrichtung aus einem elektrisch isolierenden Material, wie etwa einem Kunststoff, hergestellt ist. Auch ist es möglich, die Lagervorrichtung mit einer elektrisch isolierenden Beschichtung oder Hülle zu umgeben.

Die Lagervorrichtung ist eine Hülse, durch welche sich das Rastelement hindurch erstreckt. Die Hülse kann das Rastelement im Wesentlichen parallel zur Drehachse der Spindel abstützen und im Wesentlichen senkrecht zur Drehachse linear beweglich führen. Die Lagervorrichtung ist vorzugsweise derart in dem Werkzeugmaschinengehäuse aufgenommen, dass ein Kontakt des Rastelements mit dem Werkzeugmaschinengehäuse verhindert wird.

Um das Einpassen der Hülse in das Werkzeugmaschinengehäuse zu erleichtern, kann die Hülse an einer Außenseite ein Gewinde aufweisen. Gemäß einer weiteren vorteilhaften Ausführungsform kann anstelle eines Gewindes auch eine Rippenstruktur vorgesehen sein. Die Rippenstruktur ermöglicht der Hülse einen sicheren Halt in dem Werkzeugmaschinengehäuse.

Bevorzugt ist das Rastelement ein Stab oder Pin, welcher in der Hülse aufgenommen ist. Ein Ende des Stabs kann das Rastende und das Rastende wiederum das wenigstens eine Formschlussmittel bilden. Entsprechend kann die Spindel wenigstens eine Ausnehmung in einer Umfangswandung aufweisen, wobei die wenigstens eine Ausnehmung dann das wenigstens eine Gegenformschlussmittel bildet.

Zum Betätigen der Rastvorrichtung umfasst die Rastvorrichtung vorzugsweise ein elektrisch isolierendes Betätigungselement, welches an dem Betätigungsende des Rastelements angeordnet ist. Das Betätigungselement kann aus elektrisch isolierendem Material, z.B. Kunststoff, bestehen oder eine entsprechende Beschichtung oder Hülle aufweisen. Bevorzugt wird das Rastelement in dem Werkzeugmaschinengehäuse nur von dem Betätigungselement und der Lagervorrichtung abgestützt.

Gemäß einer bevorzugten Ausführungsform weist die Rastvorrichtung ein Federelement auf, welches das Rastelement in die Freigabestellung vorspannt. Das Rastelement befindet sich also bei unbetätigter Rastvorrichtung in der Freigabestellung. Eine Bedienperson kann, z.B. durch Drücken des Betätigungselements in Richtung Spindel, gegen die Wirkung des Federelements das Rastelement in die Verriegelungsstellung bewegen. Lässt die Bedienperson die Rastvorrichtung bzw. das Betätigungselement los, nimmt das Rastelement unter der Wirkung des Federelements wieder die Freigabestellung ein.

Das Federelement kann zwischen der Lagervorrichtung und dem Betätigungsende angeordnet sein. Beispielsweise kann das Federelement derart angeordnet sein, dass sich das Federelement auf der Lagervorrichtung bzw. der Hülse einerseits und dem Betätigungselement andererseits abstützt. Beispielsweise kann das Federelement eine Spiralfeder sein, die um das Rastelement herum angeordnet ist.

Gemäß einer bevorzugten Ausführungsform ist die Werkzeugmaschine ein Schlitzgerät, insbesondere eine Trockenbaufräse.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: einen Ausschnitt einer erfindungsgemäßen Werkzeugmaschine mit einer Rastvorrichtung;
- Fig. 2: die Spindel der Werkzeugmaschine von Fig. 1;
- Fig. 3: die Rastvorrichtung der Werkzeugmaschine von Fig. 1;
- Fig. 4: die Hülse der Rastvorrichtung von Fig. 2;
- Fig. 5: den Stab der Rastvorrichtung von Fig. 2; und
- Fig. 6: den Drücker der Rastvorrichtung von Fig. 2.

### Ausführungsbeispiel:

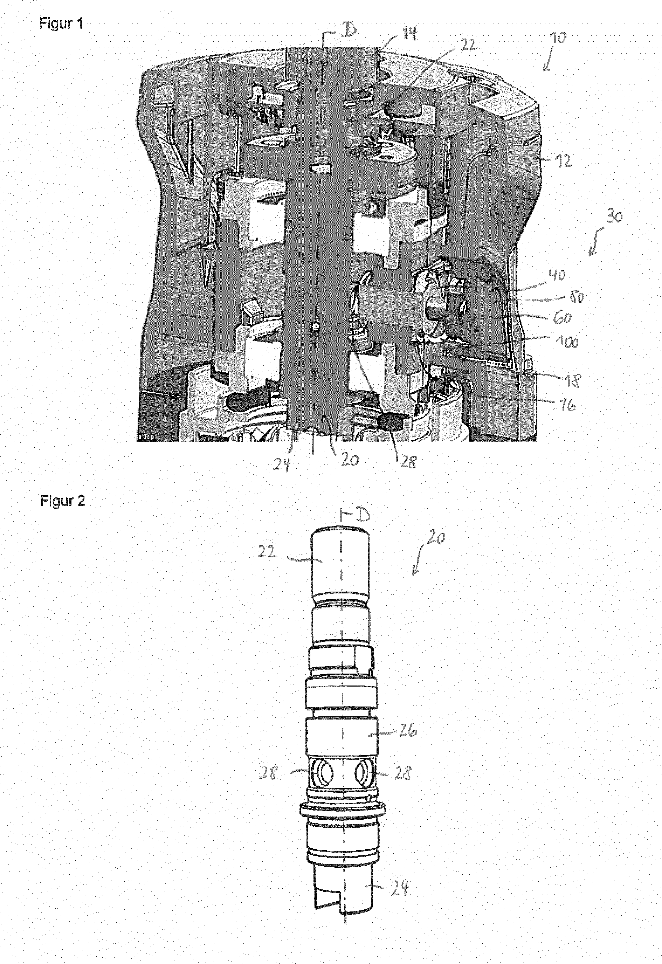

Fig. 1 zeigt einen Ausschnitt einer erfindungsgemäßen Werkzeugmaschine 10. Die Werkzeugmaschine 10 umfasst ein Werkzeugmaschinengehäuse 12, eine drehbar in dem Werkzeugmaschinengehäuse 12 gelagerte Spindel 20 mit einem Aufnahmeende 22 und einem Antriebsende 24, eine mit der Spindel 20 gekoppelte Werkzeugaufnahme 14 und eine in dem Werkzeugmaschinengehäuse 12 gelagerte Rastvorrichtung 30.

Das Antriebsende 24 der Spindel 20 ist mit einer nicht gezeigten Antriebsvorrichtung verbunden, um ein von der Werkzeugaufnahme 14 aufgenommenes, nicht gezeigtes Werkzeug um eine Drehachse D zu drehen.

Mit Bezug auf Fig. 2 weist die Spindel 20 an ihrer Umfangswandung 26 vier kreisförmige Ausnehmungen 28 auf (von denen in Fig. 2 nur zwei zu sehen sind), welche ringförmig und in Umfangsrichtung mit gleichem Abstand voneinander um die Drehachse D der Spindel 20 angeordnet sind. Die Spindel 20 kann jedoch auch eine, zwei oder eine andere Anzahl an Ausnehmungen 28 aufweisen. Jeweils eine der Ausnehmungen 28 kann mit der Rastvorrichtung 30 zusammenwirken.

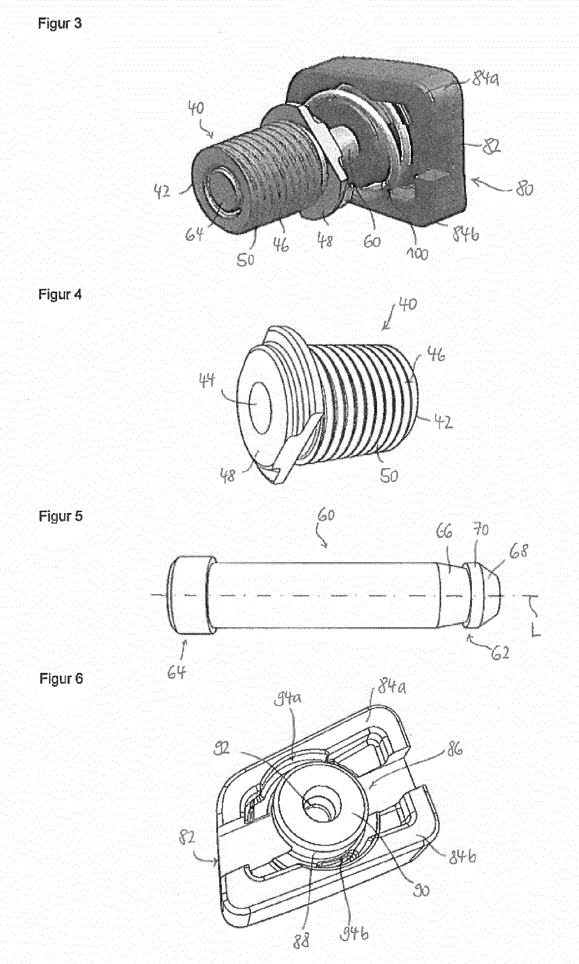

Mit Bezug auf Fig. 1 und 3 weist die Rastvorrichtung 30 eine Lagervorrichtung in Form einer Hülse 40 und ein sich durch die Hülse 40 hindurch erstreckendes Rastelement in Form eines im Wesentlichen zylindrischen Stabs 60 auf. Der Stab 60 hat ein Betätigungsende 62 und ein dem Betätigungsende 62 gegenüberliegendes Rastende 64 (Fig. 5). Die Rastvorrichtung 30 umfasst außerdem ein mit dem Betätigungsende 62 verbundenes Betätigungselement in Form eines im Wesentlichen rechteckigen Drückers 80 und ein zwischen der Hülse 40 und dem Drücker 80 angeordnetes Federelement in Form einer Spiralfeder 100.

Wie aus Fig. 1 hervorgeht, ist die Hülse 40 in eine erste Öffnung 16 des Werkzeugmaschinengehäuses 12 eingesetzt. Die genauer in Fig. 4 dargestellte Hülse 40 weist einen im Wesentlichen hohlzylindrischen Körper 42 mit einer Durchgangsöffnung 44 und eine sich radial über eine Außenseite 46 des Körpers 42 hervorstehende Stützwand 48 auf. Die Außenseite 46 weist ein Gewinde 50 auf, um ein sicheres Einpassen in die Öffnung 16 zu ermöglichen. Die Hülse 40 ist vorzugsweise aus einem elektrisch isolierenden Kunststoff hergestellt.

Die Stützwand 48 weist zwei gegenüberliegende ebene Flächen auf. Diese ebenen Flächen ermöglichen das Eingreifen eines Sechskantwerkzeugs bzw. Schraubenschlüssels, um die Hülse 40 einfach in dem Werkzeugmaschinengehäuse 12 von außen zu montieren oder demontieren.

Der in Fig. 5 einzeln dargestellte Stab 60 weist eine Längsachse L auf, welche sich im Wesentlichen senkrecht zur Drehachse D erstreckt (Fig. 1). Der Stab 60 ist in der Durchgangsöffnung 44 der Hülse 40 linear beweglich aufgenommen (Fig. 3). Aus Stabilitätsgründen ist der Stab 60 vorzugsweise aus Metall hergestellt und folglich elektrisch leitend.

An seinem Betätigungsende 62 weist der Stab 60 einen konusförmigen ersten Abschnitt 66 und einen konusförmigen zweiten Abschnitt 68 auf, welche in Längsrichtung L nebeneinander angeordnet sind und sich jeweils zum Betätigungsende 62 hin verjüngen. Zwischen dem ersten Abschnitt 66 und dem zweiten Abschnitt 68 ist ein Schulterbereich 70 angeordnet, welcher in radialer Richtung über das dem Betätigungsende 62 nähere Ende des ersten Abschnitts 66 hervorsteht. Diese Ausgestaltung des Betätigungsendes 62 des Stabs 60 dient dem Koppeln mit dem Drücker 80. Das Rastende 64 weist im Vergleich zum restlichen Stab 60 einen vergrößerten Querschnitt auf.

Fig. 1 zeigt, dass der Drücker 80 in einer zweiten Öffnung 18 des Werkzeugmaschinengehäuses 12 aufgenommen ist. Wie die Hülse 40 ist auch der Drücker 80 vorzugsweise aus einem elektrisch isolierenden Kunststoff hergestellt. Der Drücker 80 ist genauer in Fig. 3 und 6 zu sehen und weist eine mit dem Werkzeugmaschinengehäuse 12 bündige Außenwand 82 auf. Von der Außenwand 82 des Drückers 80 erstrecken sich in Richtung zur Spindel 20 hin eine obere Umfangswand 84a und eine untere Umfangswand 84b sowie eine zwischen der oberen Umfangswand 84a und der unteren Umfangswand 84b angeordnete hohlzylindrische Erhebung 86. Die Erhebung 86 weist eine Mantelwand 88 und eine von der Außenwand 82 beabstandete Deckenwand 90 auf. Des Weiteren weist der Drücker 80 an der Außenwand 82 noch einen Schlitz auf, durch den der Drücker 80 mittels eines flachen Werkzeugs (z.B. ein Schlitzschraubendreher) von dem Stab gehebelt werden kann. Der Schlitz ist in den Figuren nicht dargestellt.

Die Deckenwand 90 weist eine Öffnung 92 auf, in welche das Betätigungsende 62 des Stabs 60 eintaucht. Die Form der Innenseite der Öffnung 92 und der ersten und zweiten Abschnitte 66, 68 sind aufeinander abgestimmt. Ist der Stab 60 mit dem Drücker 80 verbunden, hintergreift der Schulterbereich 70 die Deckenwand 90 im Bereich der Öffnung 92 und der zweite Abschnitt 68 liegt an der Außenwand 82 des Drückers 80 an.

Mit Bezug auf Fig. 1 und 3 ist ein Ende der Spiralfeder 100 um die Erhebung 86 des Drückers 80 herum angeordnet. In Fig. 6 ist dargestellt, dass zwischen der Erhebung 86 und der oberen Umfangswand 84a ein oberer Kanalabschnitt 94a und zwischen der Erhebung 86 und der unteren Umfangswand 84b ein unterer Kanalabschnitt 94b gebildet ist, welche das eine Ende der Spiralfeder 100 aufnehmen. Die Spiralfeder 100 stützt sich somit mit dem einen Ende an der Außenwand 82 des Drückers 80 ab und mit dem anderen Ende umgibt die Spiralfeder 100 die Durchgangsöffnung 44 der Hülse 40 und liegt an der Stützwand 48 der Hülse 40 an.

Der Stab 60 kann eine Freigabestellung und eine Verriegelungsstellung annehmen. Bei unbetätigtem Drücker 80 befindet sich die Rastvorrichtung 30 in der in Fig. 1 dargestellten Ausgangsposition und der Stab 60 ist in seiner Freigabestellung, bei welcher das Rastende 64 des Stabs 60 außer Eingriff mit den Ausnehmungen 28 der Spindel 20, so dass sich die Spindel 20 frei um die Drehachse D drehen kann. Beim Betätigen der Rastvorrichtung 30 wird der Drücker 80 und der mit dem Drücker 80 gekoppelte Stab 60 in Richtung zur Spindel 20 hinbewegt, bis das Rastende 64 des Stabs 60 in eine der Ausnehmungen 28 einrastet. Gegebenenfalls muss eine Bedienperson die Spindel 20 zunächst noch in eine entsprechende Drehposition relativ zum Stab 60 bringen. Befinden sich der Stab 60 und eine Ausnehmung 28 in Eingriff, ist die Verriegelungsstellung des Stabs 60 erreicht und eine Drehbewegung der Spindel 20 ist nicht möglich. Die Bedienperson kann dann das mit der Spindel 20 gekoppelte Werkzeug von der Spindel 20 lösen und z.B. durch ein anderes Werkzeug ersetzen. Sollte die Spindel 20 elektrisch aufgeladen sein, kann die Ladung aufgrund der Lagerung des Stabs 60 in der elektrisch isolierenden Hülse 40 und des ebenso elektrisch isolierenden Drückers 80 nicht über die Bedienperson abfließen. Eine Gefahr eines elektrischen Schlags besteht somit nicht.

Durch das Bewegen des Drückers 80 samt Stab 60 relativ zur Hülse 40 wird die zwischen dem Drücker 80 und der Hülse 40 angeordnete Spiralfeder 100 gestaucht. Wird der Drücker 80 von der Bedienperson losgelassen, nimmt die Rastvorrichtung 30 wieder die in Fig. 1 dargestellte Ausgangsposition ein, in welcher sich der Stab 60 in seiner Freigabestellung befindet.

### Bezugszeichenliste

- D: Drehachse
- L: Längsachse
- 10: Werkzeugmaschine
- 12: Werkzeugmaschinengehäuse
- 14: Werkzeugaufnahme
- 16: Erste Öffnung
- 18: Zweite Öffnung
- 20: Spindel
- 22: Aufnahmeende
- 24: Antriebsende
- 26: Umfangswandung
- 28: Ausnehmungen
- 30: Rastvorrichtung
- 40: Lagervorrichtung/Hülse
- 42: Körper
- 44: Durchgangsöffnung
- 46: Außenseite
- 48: Stützwand
- 50: Gewinde
- 60: Rastelement/Stab
- 62: Betätigungsende
- 64: Rastende
- 66: Erster Abschnitt
- 68: Zweiter Abschnitt
- 70: Schulter
- 80: Betätigungselement/Drücker
- 82: Außenwand
- 84a, b: Obere und untere Umfangswandung
- 86: Erhebung
- 88: Mantelwand
- 90: Deckenwand
- 92: Öffnung
- 94a, b: Oberer und unterer Kanalabschnitt
- 100: Feder

## Patentansprüche

1. Werkzeugmaschine (10) mit einer Werkzeugaufnahme (14) zum auswechselbaren Aufnehmen eines Werkzeugs, die Werkzeugmaschine (10) umfassend:
ein Werkzeugmaschinengehäuse (12),
eine drehbar in dem Werkzeugmaschinengehäuse (12) gelagerte Spindel (20) mit einem Antriebsende (24) und einem Aufnahmeende (22), wobei das Antriebsende (24) mit einem Antrieb zum Drehen der Spindel (20) um eine Drehachse (D) verbunden ist und das Aufnahmeende (22) mit der Werkzeugaufnahme (14) gekoppelt ist,
eine in dem Werkzeugmaschinengehäuse (12) gelagerte Rastvorrichtung (30), welche ein Rastelement (60) mit einem Rastende (64) zum Zusammenwirken mit der Spindel (20) und
ein Betätigungsende (62) aufweist, wobei das Rastelement (60) zwischen einer Freigabestellung und einer Verriegelungsstellung reversibel bewegbar ist,
wobei das Rastende (64) des Rastelements (60) wenigstens ein Formschlussmittel (64) aufweist und wenigstens ein Gegenformschlussmittel (28) vorgesehen ist, wobei in der Freigabestellung des Rastelements (60) das wenigstens eine Formschlussmittel (64) des Rastelements (60) außer Eingriff mit dem wenigstens einen Gegenformschlussmittel (28) ist, um eine Drehbewegung der Spindel (20) zu ermöglichen, und in der Verriegelungsstellung des Rastelements (60) das wenigstens eine Formschlussmittel (64) des Rastelements (60) in Eingriff mit dem wenigstens einen Gegenformschlussmittel (28) ist, um eine Drehbewegung der Spindel (20) zu verhindern und ein Auswechseln des Werkzeugs von der Werkzeugaufnahme (14) zu ermöglichen, wobei eine elektrisch isolierende Lagervorrichtung (40) vorgesehen ist,
wobei die Spindel (20) das wenigstens eine Gegenformschlussmittel (28) aufweist,
**dadurch gekennzeichnet, dass**
die elektrisch isolierende Lagervorrichtung (40) zum Lagern des Rastelements (60) in dem Werkzeugmaschinengehäuse (12) vorgesehen ist, um das Rastelement (60) gegenüber dem Werkzeugmaschinengehäuse (12) elektrisch zu isolieren, und dass
die Lagervorrichtung eine Hülse (40) ist, durch welche sich das Rastelement (60) hindurch erstreckt und welche das Rastelement (60) linear beweglich lagert.

2. Werkzeugmaschine (10) nach Anspruch 1,
**dadurch gekennzeichnet, dass** die Hülse (40) eine Außenseite (46) mit einem Gewinde (50) aufweist.

3. Werkzeugmaschine (10) nach einem der Ansprüche 1 bis 2,
**dadurch gekennzeichnet, dass** das Rastelement ein Stab (60) ist und das Rastende (64) des Stabs (60) das wenigstens eine Formschlussmittel (64) bildet.

4. Werkzeugmaschine (10) nach einem der Ansprüche 1 bis 3,
**dadurch gekennzeichnet, dass** die Spindel (20) wenigstens eine Ausnehmung (28) in einer Umfangswandung (26) aufweist und die wenigstens eine Ausnehmung (28) ein Gegenformschlussmittel (28) bildet.

5. Werkzeugmaschine (10) nach einem der Ansprüche 1 bis 4,
**dadurch gekennzeichnet, dass** die Rastvorrichtung (30) ferner ein elektrisch isolierendes Betätigungselement (80) zum Betätigen der Rastvorrichtung (30) umfasst, welches an dem Betätigungsende (62) des Rastelements (60) angeordnet ist.

6. Werkzeugmaschine (10) nach einem der Ansprüche 1 bis 5,
**dadurch gekennzeichnet, dass** die Rastvorrichtung (30) ferner ein Federelement (100), insbesondere einer Spiralfeder, aufweist, welche das Rastelement (60) in die Freigabestellung vorspannt.

7. Werkzeugmaschine (10) nach einem der Ansprüche 1 bis 6,
**dadurch gekennzeichnet, dass** das Federelement (100) zwischen der Lagervorrichtung (40) und dem Betätigungsende (62) angeordnet ist.

8. Werkzeugmaschine (10) nach einem der Ansprüche 1 bis 7,
**dadurch gekennzeichnet, dass** die Werkzeugmaschine (10) ein Schlitzgerät, insbesondere eine Trockenbaufräse, ist.

## Claims

1. Power tool (10) having a tool fitting (14) for exchangeably receiving a tool, the power tool (10) comprising:
a power tool housing (12),
a spindle (20) rotatably mounted in the power tool housing (12) and having a drive end (24) and a receiving end (22), wherein the drive end (24) is connected to a drive for rotating the spindle (20) about an axis of rotation (D), and the receiving end (22) is coupled to the tool fitting (14),
a latching device (30) mounted in the power tool housing (12) and having a latching element (60) with a latching end (64) for interacting with the spindle (20) and an actuating end (62), wherein the latching element (60) is reversibly movable between a release position and a locking position,
wherein the latching end (64) of the latching element (60) has at least one form-fitting means (64), and at least one mating form-fitting means (28) is provided, wherein, in the release position of the latching element (60), the at least one form-fitting means (64) of the latching element (60) is disengaged from the at least one mating form-fitting means (28) to allow a rotary movement of the spindle (20), and, in the locking position of the latching element (60), the at least one form-fitting means (64) of the latching element (60) is engaged with the at least one mating form-fitting means (28) to prevent a rotary movement of the spindle (20) and to allow an exchange of the tool from the tool fitting (14), wherein an electrically insulating mounting device (40) is provided, wherein the spindle (20) has the at least one mating form-fitting means (28),
**characterized in that** the electrically insulating mounting device (40) is provided for mounting the latching element (60) in the power tool housing (12) in order to electrically insulate the latching element (60) with respect to the power tool housing (12), and **in that** the mounting device is a sleeve (40) through which the latching element (60) extends and which mounts the latching element (60) in a linearly movable manner.

2. Power tool (10) according to Claim 1,
**characterized in that** the sleeve (40) has an outer side (46) with a thread (50).

3. Power tool (10) according to either of Claims 1 and 2,
**characterized in that** the latching element is a bar (60), and the latching end (64) of the bar (60) forms the at least one form-fitting means (64).

4. Power tool (10) according to one of Claims 1 to 3,
**characterized in that** the spindle (20) has at least one aperture (28) in a circumferential wall (26), and the at least one aperture (28) forms a mating form-fitting means (28).

5. Power tool (10) according to one of Claims 1 to 4,
**characterized in that** the latching device (30) also comprises an electrically insulating actuating element (80) for actuating the latching device (30) which is arranged at the actuating end (62) of the latching element (60).

6. Power tool (10) according to one of Claims 1 to 5,
**characterized in that** the latching device (30) also has a spring element (100), in particular of a spiral spring, which preloads the latching element (60) into the release position.

7. Power tool (10) according to one of Claims 1 to 6,
**characterized in that** the spring element (100) is arranged between the mounting device (40) and the actuating end (62).

8. Power tool (10) according to one of Claims 1 to 7,
**characterized in that** the power tool (10) is a slot cutter, in particular a drywall cutter.

## Revendications

1. Machine-outil (10) avec un logement d'outil (14) pour recevoir un outil de manière interchangeable, la machine-outil (10) comprenant :
un carter de machine-outil (12),
une broche (20) supportée de manière rotative dans le carter de machine-outil (12) avec une extrémité d'entraînement (24) et une extrémité de réception (22), l'extrémité d'entraînement (24) étant reliée à un entraînement pour faire tourner la broche (20) autour d'un axe de rotation (D) et l'extrémité de réception (22) étant couplée au logement d'outil (14),
un dispositif d'encliquetage (30) supporté dans le carter de machine-outil (12), qui présente un élément d'encliquetage (60) avec une extrémité d'encliquetage (64) pour coopérer avec la broche (20) et une extrémité d'actionnement (62), l'élément d'encliquetage (60) pouvant être déplacé de manière réversible entre une position de libération et une position de verrouillage,
l'extrémité d'encliquetage (64) de l'élément d'encliquetage (60) présentant au moins un moyen de complémentarité de forme (64), et au moins un moyen de complémentarité de forme antagoniste (28) étant prévu ; dans la position de libération de l'élément d'encliquetage (60), l'au moins un moyen de complémentarité de forme (64) de l'élément d'encliquetage (60) étant hors de prise avec l'au moins un moyen de complémentarité de forme antagoniste (28) afin de permettre un mouvement de rotation de la broche (20) et, dans la position de verrouillage de l'élément d'encliquetage (60), l'au moins un moyen de complémentarité de forme (64) de l'élément d'encliquetage (60) étant en prise avec l'au moins un moyen de complémentarité de forme antagoniste (28) afin d'empêcher un mouvement de rotation de la broche (20) et de permettre un remplacement de l'outil du logement d'outil (14), un dispositif de palier électriquement isolant (40) étant prévu, la broche (20) présentant l'au moins un moyen de complémentarité de forme antagoniste (28),
**caractérisée en ce que**
le dispositif de palier électriquement isolant (40) est prévu pour supporter l'élément d'encliquetage (60) dans le carter de machine-outil (12) afin d'isoler électriquement l'élément d'encliquetage (60) par rapport au carter de machine-outil (12), et **en ce que** le dispositif de palier est une douille (40) à travers laquelle s'étend l'élément d'encliquetage (60) et qui supporte l'élément d'encliquetage (60) de manière linéairement mobile.

2. Machine-outil (10) selon la revendication 1,
**caractérisée en ce que** la douille (40) présente un côté extérieur (46) avec un filetage (50).

3. Machine-outil (10) selon l'une quelconque des revendications 1 à 2,
**caractérisée en ce que** l'élément d'encliquetage est une tige (60) et l'extrémité d'encliquetage (64) de la tige (60) forme l'au moins un moyen de complémentarité de forme (64).

4. Machine-outil (10) selon l'une quelconque des revendications 1 à 3,
**caractérisée en ce que** la broche (20) présente au moins un évidement (28) dans une paroi périphérique (26) et l'au moins un évidement (28) forme un moyen de complémentarité de forme antagoniste (28).

5. Machine-outil (10) selon l'une quelconque des revendications 1 à 4,
**caractérisée en ce que** le dispositif d'encliquetage (30) comprend en outre un élément d'actionnement électriquement isolant (80) pour actionner le dispositif d'encliquetage (30), qui est agencé à l'extrémité d'actionnement (62) de l'élément d'encliquetage (60).

6. Machine-outil (10) selon l'une quelconque des revendications 1 à 5,
**caractérisée en ce que** le dispositif d'encliquetage (30) présente en outre un élément à ressort (100), notamment un ressort spiral, qui précontraint l'élément d'encliquetage (60) dans la position de libération.

7. Machine-outil (10) selon l'une quelconque des revendications 1 à 6,
**caractérisée en ce que** l'élément à ressort (100) est agencé entre le dispositif de palier (40) et l'extrémité d'actionnement (62).

8. Machine-outil (10) selon l'une quelconque des revendications 1 à 7,
**caractérisée en ce que** la machine-outil (10) est un appareil à rainurer, notamment une fraise de construction à sec.
